# EUROPÄISCHE PATENTSCHRIFT

(11) **EP 2 825 909 B1**
(45) Veröffentlichungstag und Bekanntmachung des Hinweises auf die Patenterteilung: **09.05.2018**
(21) Anmeldenummer: 13711607.5
(22) Anmeldetag: 14.03.2013
(51) Int. Cl.: G02B 27/09, G02B 19/00, G02B 3/14

(54) **LEUCHTE MIT IM WESENTLICHEN PUNKTFÖRMIGER LICHTQUELLE UND ZUGEORDNETEM OPTISCHEN SYSTEM**
LUMINAIRE HAVING A SUBSTANTIALLY POINT-SHAPED LIGHT SOURCE AND ASSIGNED OPTICAL SYSTEM
LUMINAIRE COMPORTANT UNE SOURCE LUMINEUSE SENSIBLEMENT PONCTUELLE ET UN SYSTÈME OPTIQUE ASSOCIÉ

(30) Priorität: 15.03.2012 DE 102012204068
(43) Veröffentlichungstag der Anmeldung: 21.01.2015
(73) Patentinhaber: Zumtobel Lighting GmbH, 6850 Dornbirn (AT)
(72) Erfinder: EBNER, Stephan, A-6850 Dornbirn (AT); KELLER, Katharina, 88161 Lindau (DE); SEYRINGER, Heinz, A-6973 Höchst (AT); VAMBERSZKY, Klaus, A-6900 Bregenz (AT)
(74) Vertreter: Thun, Clemens
(86) Internationale Anmeldenummer: PCT/EP2013/055251
(87) Internationale Veröffentlichungsnummer: WO 2013/135821

(56) Entgegenhaltungen:
- WO-A1-2004/027769
- WO-A1-2005/096289
- WO-A1-2011/054392
- WO-A2-2005/006312
- US-A- 5 864 128

## Beschreibung

Die vorliegende Erfindung betrifft eine Leuchte, welche eine im Wesentlichen punktförmige Lichtquelle sowie ein der Lichtquelle zugeordnetes optisches System aufweist. Bei der Lichtquelle kann es sich insbesondere um eine LED oder eine organische LED, OLED, handeln.

Die Weiterentwicklung von LEDs in den letzten Jahren hat dazu geführt, dass derartige Lichtquellen in nahezu sämtlichen Bereichen der Beleuchtungstechnologie eingesetzt werden können. Waren LEDs hinsichtlich ihrer Lichtabgabe früher zu schwach um klassische Lichtquellen wie Leuchtstofflampen oder Glühbirnen ersetzen zu können, bestehen bei LEDs neuerer Generation derartige Einschränkungen nicht mehr. Beispielsweise ist es üblich, anstelle einer Leuchtstofflampe mehrere LEDs in Längsrichtung hintereinander auf einer Platine anzuordnen. Aufgrund ihrer höheren Lebensdauer sowie besseren Möglichkeiten zum Einstellen der Helligkeit und/oder der Farbabgabe weisen dann derartige Lichtquellen auf LED-Basis deutliche Vorteile auf.

Ein Sonderfall einer Leuchte mit einer LED als Lichtquelle besteht darin, dass lediglich eine einzelne LED bzw. eine sehr kompakt gehaltene LED-Anordnung als Lichtquelle verwendet wird. Anwendungsfälle hierfür sind beispielsweise Strahler, Downlights oder so genannte Highbay-Leuchten, die üblicherweise ein verhältnismäßig kompaktes Gehäuse aufweisen und Licht in Form eines auf einen vorgegebenen Winkelbereich begrenzten Strahlenbündels abstrahlen. Derartige Leuchten dienen also weniger dazu, als großflächige leuchtende Elemente wahrgenommen zu werden, sondern werden in erster Linie dazu verwendet, bestimmte Bereiche oder Objekte gezielt zu beleuchten.

Die Größe des Strahlenbündels bzw. dessen Öffnungswinkel sollte hierbei in erster Linie von den tatsächlichen Einsatzbedingungen abhängen, insbesondere von dem Abstand der Leuchte zu dem zu beleuchtenden Bereich sowie dessen Größe. Nur in diesem Fall ist sichergestellt, dass tatsächlich auch ausschließlich der zu beleuchtende Bereich ausgeleuchtet wird. Da allerdings in der Regel die räumlichen Gegebenheiten, also die Position der Leuchte in Bezug auf den zu beleuchtenden Bereich sowie dessen Größe bei der Herstellung der Leuchte in der Regel nicht bekannt sind, sollte idealerweise die Möglichkeit bestehen, den Öffnungswinkel des abgegebenen Lichtbündels entsprechend anpassen zu können. Zwar sind entsprechend flexible optische Systeme bereits bekannt, diese weisen allerdings oftmals den Nachteil auf, dass sich bei einer Veränderung des Öffnungswinkels des abgegebenen Lichtbündels die Qualität der Lichtabgabe verändert.

Der WO 2005/096289 A1, der WO 2011/054392 A1 und der US 5,864,128 können Vorrichtungen mit verschiedenen optischen Systemen entnommen werden.

Der vorliegenden Erfindung liegt die Aufgabenstellung zugrunde, eine Möglichkeit anzugeben, die Lichtabgabe bei einer Leuchte mit einer im Wesentlichen punktförmigen Lichtquelle effizient einstellen zu können, ohne hierbei Einbußen bei der Qualität der Lichtabgabe in Kauf nehmen zu müssen.

Die Aufgabe wird durch eine Leuchte, welche die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf der Idee, zum Anpassen der Lichtabgabe der Leuchte ein optisches System einzusetzen, welches zwei in Lichtabstrahlrichtung hintereinander angeordnete Linsen aufweist. Die Linsen befinden sich hierbei an festen Positionen, wobei die in dem Strahlengang nachfolgende Linse, also die zweite Linse des erfindungsgemäßen optischen Systems durch eine sog. adaptive Flüssigkeitslinse gebildet und die erste Linse durch eine Vorsatzlinse gebildet ist, deren der adaptiven Flüssigkeitslinse zugeordnete Lichtaustrittsfläche mit einer Struktur versehen ist, welche eine kleine bzw. geringfügige Winkelstreuung des austretenden Lichts bewirkt.

Erfindungsgemäß wird dementsprechend eine Leuchte mit einer im Wesentlichen punktförmigen Lichtquelle sowie einem der Lichtquelle zugeordneten optischen System vorgeschlagen, wobei das optische System zwei in Lichtabstrahlrichtung der Leuchte hintereinander, an festen Positionen angeordnete Linsen aufweist und die zweite Linse durch eine adaptive Flüssigkeitslinse gebildet und die erste Linse durch eine Vorsatzlinse gebildet ist, deren der adaptiven Flüssigkeitslinse zugeordnete Lichtaustrittsfläche mit einer Struktur versehen ist, welche eine kleine bzw. geringfügige Winkelstreuung des austretenden Lichts bewirkt, wobei die kleine bzw. geringfügige Winkelstreuung derart bemessen ist, dass der sog. Halbwertswinkel bei ±20° liegt, wobei die Struktur dazu beiträgt, dass das von der Lichtquelle abgestrahlte Licht auf die Flüssigkeitslinse gerichtet wird und wobei die erste Linse derart ausgestaltet und positioniert ist, dass ein Lichtbündel erzeugt wird, welches vollständig und mittig auf die nachfolgende adaptive Flüssigkeitslinse geworfen wird. Grundsätzlich sind Flüssigkeitslinsen bereits bekannt. Es handelt sich um optische Linsen mit einer elektrisch variierbaren Brennweite. Eine klassische Flüssigkeitslinse weist ein geschlossenes System bestehend aus durchsichtigen, dehnbaren Membranen und einem Container auf, in dem eine Flüssigkeit enthalten ist. Durch eine Volumenänderung des Containers kann die Flüssigkeit reversibel in den Bereich zwischen die Membranen gepresst werden, wodurch eine linsenartige Struktur gebildet wird, deren Form und damit Brennweite veränderbar ist. Dieses Konzept, des bislang in erster Linie bei Optiken für Digitalkameras - beispielsweise in Mobiltelefonenbekannt war, wird gemäß der vorliegenden Erfindung nunmehr zur Realisierung einer hochqualitativen einstellbaren Optik für Beleuchtungszwecke genutzt, wobei in Zusammenwirken mit der erfindungsgemäß ausgestalteten ersten Linse nicht nur eine Anpassung der Lichtabgabe ermöglicht sondern insbesondere auch eine Verbesserung der Lichtabgabe erzielt wird.

Der Vorteil des Einsatzes einer adaptiven Flüssigkeitslinse besteht dabei darin, dass beide Linsen des optischen Systems fest an vorgegebenen Positionen angeordnet sind und trotz allem eine Einstellung der Lichtabgabe erfolgen kann. Dies stellt einen eindeutigen Vorteil gegenüber der klassischen Vorgehensweise dar, nämlich zwei in ihrem Abstand zueinander veränderbare Linsen einzusetzen, da aufgrund der festen räumlichen Zuordnung die Möglichkeit besteht, die Wirkung beider Linsen besser aufeinander abzustimmen. Ferner wird die Effizienz insgesamt erhöht, da sichergestellt werden kann, dass das von der ersten Linse beeinflusste und auf die adaptive Flüssigkeitslinse geworfene Licht vollständig dort genutzt wird und dementsprechend im Vergleich zu einer variablen Positionierung der Linsen keine Verluste auftreten können. Die oben erwähnte besondere Ausgestaltung der Lichtaustrittsfläche der ersten Linse, also deren Strukturierung, trägt hierbei zusätzlich dazu bei, dass das von der Lichtquelle üblicherweise in einen sehr breiten Winkelbereich abgestrahlte Licht effizient auf die Flüssigkeitslinse gerichtet wird.

Vorzugsweise ist die erste Linse durch eine kollimierende, insbesondere eine fokussierende Vorsatzlinse gebildet. Diese ist derart ausgestaltet und positioniert, dass ein Lichtbündel erzeugt wird, welches vollständig und mittig auf die nachfolgende adaptive Flüssigkeitslinse geworfen wird. Dabei weist die Lichtaustrittsfläche der Vorsatzlinse vorzugsweise eine ebene Form auf. Diese Maßnahmen tragen zusätzlich dazu bei, dass ein sehr gleichmäßiges Lichtbündel erhalten wird, dessen Gleichmäßigkeit auch nicht durch eine Veränderung der Einstellung der adaptiven Flüssigkeitslinse beeinträchtigt wird. Dabei kann ferner vorgesehen sein, dass die Lichtaustrittsfläche der Vorsatzlinse zusätzlich leicht aufgeraut ist und dementsprechend eine leicht diffuse Lichtabgabe bewirkt. Der Effekt der diffusen Lichtabgabe ist hierbei sehr gering und beeinträchtigt die grundsätzliche Funktion der Vorsatzlinse, nämlich das Licht auf die Flüssigkeitslinse zu bündeln, nicht. Er bewirkt allerdings eine gewisse Vergleichmäßigung der Lichtabgabe, so dass Inhomogenitäten vermieden werden können.

Vorzugsweise weist die Leuchte entsprechend geeignete Mittel zum Einstellen der adaptiven Flüssigkeitslinse auf. Diese können beispielsweise mechanischer Natur und beispielsweise durch ein drehbar gelagertes Gehäuseteil gebildet sein, wobei dann ein Verdrehen des Gehäuseteils in ein entsprechendes Verstellen der Flüssigkeitslinse umgesetzt wird. Alternativ hierzu wäre auch eine elektrische Verstellung der Flüssigkeitslinse mit Hilfe eines extern ansteuerbaren Stellmotors denkbar, wobei Signale zum Einstellen der Linse von einer Zentrale aus z.B. mittels dem bekannten DMX- oder DALI-Standard an die Leuchte übermittelt werden können.

Vorzugsweise ist vorgesehen, die beiden Linsen entlang einer von der Lichtquelle ausgehenden Zentralachse auszurichten. In diesem Fall ist gewährleistet, dass das von der Lichtquelle emittierte Licht vollständig genutzt und mit hoher Effizienz in dem gewünschten Winkelbereich abgestrahlt wird.

Ferner wäre es denkbar, mehrere der erfindungsgemäßen optischen Systeme in eine Leuchte zu integrieren um hierbei durch entsprechende Überlagerung oder dergleichen zusätzliche optische Effekte zu erhalten. Dabei können nebeneinander angeordnet mehrere gleichartige optische Systeme vorgesehen sein, denen jeweils eine - in ihrer Intensität, Farbe und/oder Farbtemperatur - unterschiedliche Lichtquelle zugeordnet ist.

Nachfolgend soll die Erfindung anhand der beiliegenden Zeichnung näher erläutert werden. Es zeigen:
- Figur 1: ein Ausführungsbeispiel eines Strahlers, bei dem ein erfindungsgemäß ausgestaltetes optisches System zum Einsatz kommt;
- Figur 2: zwei denkbare Lichtverteilungskurven für den Strahler gemäß Figur 1;
- Figuren 3 und 4: zwei alternative Möglichkeiten zur Realisierung des optischen Systems und
- Figur 5: eine nicht erfindungsgemäße alternative Abwandlung des optischen Systems.

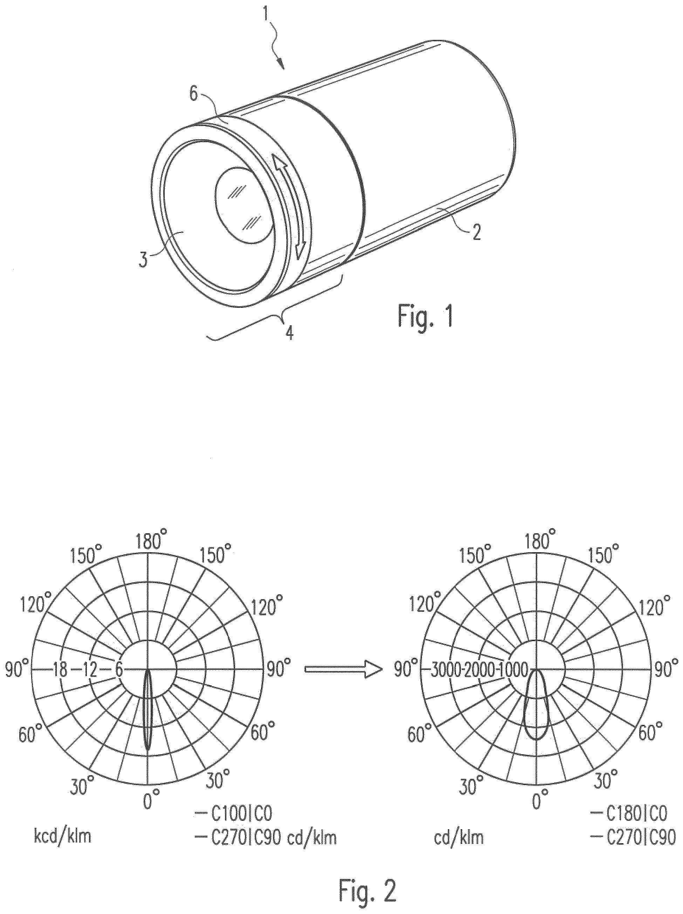

Als Anwendungsbeispiel für die vorliegende Erfindung ist in Figur 1 ein Strahler dargestellt, der allgemein mit dem Bezugszeichen 1 versehen und beispielsweise dazu vorgesehen ist, an der Decke eines Raums an einem entsprechenden Trägerelement, beispielsweise einer Tragschiene eines Lichtband- oder Stromschienensystems angeordnet zu werden. Die entsprechenden Mittel zur Halterung des Strahlers 1 sowie zur Kontaktierung entsprechender Leitungen sind nicht Bestandteil der vorliegenden Erfindung und dementsprechend in Figur 1 nicht näher dargestellt.

Der dargestellte Strahler 1 weist ein zylinderförmiges Gehäuse 2 auf, in dessen Inneren eine Lichtquelle sowie entsprechende Mittel zum Betreiben der Lichtquelle angeordnet sind. Die Lichtquelle ist hierbei eine einzelne Lichtquelle mit kompakten Abmessungen, vorzugsweise eine Hochleistungs-LED. Eine derartige Lichtquelle erzeugt ausreichend Licht, um mit Hilfe des Strahlers 1 gezielt bestimmte Bereiche, auf die der Strahler 1 ausgerichtet ist, beleuchten zu können. Ggf. könnte allerdings auch eine kompakte Anordnung mehrerer, evtl. verschiedenfarbiger LEDs zum Einsatz kommen könnte. Auch wäre die Verwendung von organischen Leuchtdioden, sog. OLEDs denkbar.

Mittels einem der Lichtquelle vorgeordneten optischen System wird das Licht gebündelt und dann über eine vordere Austrittsöffnung 3 des Leuchtengehäuses 2 abgegeben. Das optische System ist dabei in einem vorderen Bereich 4 des Strahlergehäuses 2 angeordnet, wobei dieser Bereich 4 vorzugsweise abnehmbar von dem restlichen Gehäuse 2 gestaltet ist, um Zugang zu der Lichtquelle zu erhalten. Wartungsarbeiten und dergleichen werden hierdurch vereinfacht. Die Befestigung dieses abnehmbaren Bereichs 4 kann beispielsweise mittels einer Bajonettverriegelung oder dergleichen erfolgen.

Lichtquellen, wie sie bei dem erfindungsgemäßen Strahler 1 zum Einsatz kommen sollen, also z.B. LEDs, strahlen üblicherweise Licht in einem sehr breiten Winkelbereich ab. Die der Lichtquelle vorgeordnete Optik dient dementsprechend dazu, das LED-Licht in geeigneter Weise zu bündeln und innerhalb eines vorgegebenen Winkelbereichs abzustrahlen. Im Vergleich zu großflächigen Leuchten ist hierbei das von dem Strahler 1 abgegebene Licht verhältnismäßig stark gebündelt.

Denkbare Lichtverteilungskurven, wie sie mit einer derartigen Strahlerleuchte 1 erzielt werden können, sind beispielsweise in Figur 2 dargestellt. Die linke Lichtverteilungskurve entspricht hierbei einem sehr engen Strahlenbündel mit einem Öffnungswinkel von lediglich 10°. Das Licht wird in diesem Fall also sehr stark auf einen lediglich kleinen Bereich konzentriert. Demgegenüber ist auf der rechten Seite eine Lichtverteilungskurve eines Strahlenbündels mit einem Öffnungswinkel von etwa 40° dargestellt.

Da Strahler 1, wie sie in Figur 1 dargestellt sind, üblicherweise dazu verwendet werden, gezielt einen sehr exakt bemessenen Bereich zu beleuchten, wäre es wünschenswert, den Öffnungswinkel des abgegebenen Lichtbündels einstellen bzw. anpassen zu können. Je nach dem, in welchem Abstand sich der Strahler 1 von dem zu beleuchtenden Bereich befindet und welche Abmessungen dieser Bereich aufweist, muss der Öffnungswinkel des Strahlenbündels gewählt werden, um sicherzustellen, dass tatsächlich nur der gewünschte Bereich - dieser allerdings vollständig - beleuchtet wird. Dementsprechend wäre es wünschenswert, dass ein Endverbraucher wahlweise die Lichtverteilungskurve beispielsweise zwischen den beiden in Figur 2 dargestellten Extremsituationen verändern kann.

Die nachfolgend beschriebene erfindungsgemäße Lösung eröffnet diese Möglichkeit, wobei diese Lösung insbesondere auch gewährleistet, dass die Qualität des abgegebenen Lichts bei einer Veränderung des Öffnungswinkels nicht beeinträchtigt wird. D.h., unabhängig von der Einstellung des optischen Systems ist gewährleistet, dass das Strahlenbündel eine zu beleuchtende Fläche gleichmäßig beleuchtet, ohne dass beispielsweise durch die Lichtquelle selbst oder andere Elemente des optischen Systems hellere oder dunklere Stellen erscheinen.

Die erfindungsgemäße Lösung beruht auf dem Gedanken, zwei Linsen miteinander zu kombinieren, wobei diese in Abstrahlrichtung hintereinander angeordnet sind und eine der beiden Linsen, insbesondere die zweite Linse durch eine adaptive Flüssigkeitslinse gebildet ist. Wie bereits erwähnt bietet eine derartige adaptive Flüssigkeitslinse die Möglichkeit, ihre Brennweite zu variieren und dementsprechend den Öffnungswinkel des Strahlenbündels gezielt einzustellen.

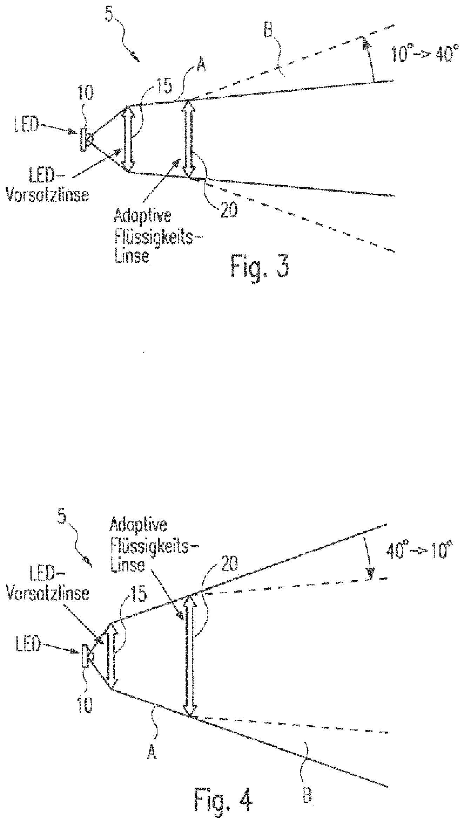

Die Figuren 3 und 4 zeigen hierzu zwei alternative Möglichkeiten zur Realisierung der erfindungsgemäßen Optik 5. Beiden Varianten ist gemeinsam, dass die erste - schematisch durch einen Pfeil dargestellte - Linse 15, also die sich näher an der LED 10 bzw. allgemein der Lichtquelle befindende Linse durch eine Vorsatzlinse gebildet ist. Im Strahlengang dieser Vorsatzlinse 15 nachgeordnet ist dann die adaptive Flüssigkeitslinse 20 angeordnet, wobei die Positionen beider Linsen 15 und 20 nicht variabel sind. Beide Linsen 15, 20 befinden sich also in einer festen Anordnung zueinander sowie bezüglich der LED 10.

Die Funktion der Vorsatzlinse 15 besteht dabei darin, das unmittelbar von der LED 10 abgegebene Licht zunächst in ein erstes Strahlenbündel A mit einem bestimmten Öffnungswinkel umzusetzen. Da die LED 10 selbst Licht in einem sehr großen Winkelbereich, beispielsweise mit einem Öffnungswinkel von etwa 80° abgibt, stellt die Vorsatzlinse 15 also eine kollimierende, insbesondere eine fokussierende Linse dar, die beispielsweise den Öffnungswinkel bei dem in Figur 3 dargestellten Beispiel auf 10° reduziert. Hierfür können beispielsweise so genannte Narrow Beam (NB)-Linsen zum Einsatz kommen. Dabei ist die Lichtaustrittsfläche der Linse 15 zusätzlich strukturiert ausgeführt, wobei die Struktur derart ausgeführt ist, dass sie eine kleine bzw. geringfügige Winkelstreuung des austretenden Lichts bewirkt. Insbesondere sollte diese kleine bzw. geringfügige Winkelstreuung derart bemessen sein, dass der sog. Halbwertswinkel bei ±20°, vorzugsweise bei ±15° und besonders bevorzugt bei ±10° liegt, wobei unter dem Halbwertswinkel der Winkel verstanden wird, der zwischen der Richtung des Strahlungs- bzw. Helligkeitsmaximums und der Richtung liegt, in der die Strahlungsleistung bzw. Helligkeit halb so groß ist wie im Maximum. Hierdurch wird die lichtbündelnde Wirkung der Vorsatzlinse verbessert. Die Anordnung der Vorsatzlinse 15 bezüglich der LED-Lichtquelle 10 ist dabei derart, dass das von der LED 10 emittierte Licht nahezu vollständig in die Vorsatzlinse 15 eintritt und von dieser zu dem eng bemessenen Strahlenbündel A umgesetzt wird.

Dieses Strahlenbündel A wird dann auf die adaptive Flüssigkeitslinse 20 gerichtet, wobei wiederum deren Position in Bezug auf die Vorsatzlinse 15 derart gewählt ist, dass der Querschnitt des Strahlenbündels A an dieser Stelle den Abmessungen der Flüssigkeitslinse 20 entspricht. Hierdurch ist sichergestellt, dass das Licht letztendlich nahezu vollständig genutzt und in gewünschter Weise abgegeben wird, was letztendlich zu einer hohen Effizienz des Strahlers 1 führt. Diesbezüglich weist die erfindungsgemäße Optik 5 auch deutliche Vorteile gegenüber bekannten Systemen auf, bei denen Linsen entlang der optischen Achse relativ zueinander verstellbar sind. Zwar kann auch in diesem Fall eine Anpassung des Strahlenbündels erfolgen, es können allerdings Verluste auftreten, da die Position der Linsen zueinander nicht immer optimal ist, um das Licht effizient zu nutzen. Derartige Probleme werden mit der erfindungsgemäßen Lösung vermieden.

Die adaptive Flüssigkeitslinse 20 selbst ist dann in der Lage, das eintreffende Strahlenbündel A dem Wunsch des Benutzers entsprechend in das letztendlich von dem Strahler 1 abgegebene Strahlenbündel B aufzuweiten. Hierzu kommt vorzugsweise eine aufweitende adaptive Flüssigkeitslinse zum Einsatz, deren Form zwischen einer plan-parallelen Form und einer konvexen bzw. konkaven Form verändert werden kann. Beispielsweise kann die Flüssigkeitslinse 20 derart ausgelegt sein, dass eine Aufweitung innerhalb eines Bereichs von 10° bis 40° erfolgt.

Eine hierzu alternative Ausführungsform ist in Figur 4 dargestellt, wobei nunmehr die Vorsatzlinse 15 das Licht der LED 10 in ein verhältnismäßig breites Strahlenbündel A mit einem Öffnungswinkel von etwa 40° umsetzt. Hierfür könnte dann eine sog. Wide Beam (WB) Linse zum Einsatz kommen. In diesem Fall ist die Flüssigkeitslinse 20 vorzugsweise in Form einer fokussierenden adaptiven Flüssigkeitslinse, deren Struktur von plan-parallel zu konvex veränderbar ist, derart ausgelegt, dass das letztendlich abgegebene Strahlenbündel B nunmehr hinsichtlich seines Öffnungswinkels reduziert wird und die Einstellung im Bereich von 40° bis 10° erfolgen kann. Beide dargestellten Varianten der Figuren 3 und 4 sind in dieser Hinsicht also gleichwertig, da letztendlich ein Lichtbündel innerhalb eines Bereichs von 10° bis 40° wahlweise eingestellt werden kann. Auch bei dieser zweiten Variante gemäß Figur 4 ist die Position der adaptiven Flüssigkeitslinse 20 derart gewählt, dass sie hinsichtlich ihrer Größe in etwa mit dem Querschnitt des Lichtbündels A, welches von der Vorsatzlinse 15 abgegeben wird, übereinstimmt.

Wie bereits erwähnt ist es wünschenswert, dass unabhängig von der gewählten Einstellung des letztendlich abgegebenen Lichtbündels B eine homogene Beleuchtung erzielt wird. Dabei ist insbesondere darauf zu achten, dass Farbinhomogenitäten vermieden werden, die beispielsweise dann auftreten können, wenn die adaptive Flüssigkeitslinse 20 partiell mit Licht unterschiedlicher Spektren beleuchtet wird. Um dies zu vermeiden, ist erfindungsgemäß die Vorsatzlinse 15 derart ausgebildet, dass das sie verlassende Licht leicht gestreut bzw. diffus abgegeben wird, um eine evtl. Mischung verbleibender Inhomogenitäten zu bewirken. Hierzu kann die Lichtaustrittsfläche der Vorsatzlinse 15 beispielsweise leicht mattiert bzw. aufgeraut ausgebildet sein. Die diffuse Streuung ist allerdings sehr gering, so dass sie nicht zu einer wesentlichen Veränderung bzw. einer Aufweitung des Strahlenbündels führt und dementsprechend nach wie vor das Licht vollständig und effektiv auf die Flüssigkeitslinse geworfen werden kann.

Eine weitere vorteilhafte Ausgestaltung der Vorsatzlinse 15 besteht auch darin, dass sie - abgesehen von der Mattierung bzw. Aufrauhung - eine ebene Lichtaustrittsfläche aufweist. Hierdurch kann vermieden werden, dass bei einem Verstellen der adaptiven Flüssigkeitslinse 20, was ein Verstellen ihrer Brennweite zur Folge hat, bestimmte Bereiche der Vorsatzlinse 15 anderweitig abgebildet werden, wie dies beispielsweise bei einer gekrümmten Ausgestaltung der Lichtaustrittsfläche der Vorsatzlinse 15 der Fall wäre. Diese bevorzugte ebene Ausgestaltung der Lichtaustrittsfläche der Vorsatzlinse 15 führt also zusätzlich dazu, dass ein Verstellen der adaptiven Flüssigkeitslinse 20 keine Auswirkungen auf die Homogenität der Lichtabgabe hat. Letztendlich kann also mit Hilfe des erfindungsgemäßen optischen Systems 5 sehr einfach und effektiv die Lichtabgabe des Strahlers 1 beeinflusst werden, wobei in jeglicher Einstellung des Systems eine qualitativ hochwertige Lichtabgabe erzielt wird.

Das Verstellen der Optik 5, also eine Einstellung der adaptiven Flüssigkeitslinse 20 könnte dabei sowohl durch den Benutzer selbst bzw. manuell als auch elektrisch erfolgen. Eine einfache manuelle Variante würde beispielsweise darin bestehen, einen vorderen Ring 6 des Aufsatzes 4 (siehe Figur 1) drehbar zu gestalten. Innerhalb der Optik sind dann Mittel angeordnet, welche eine Verdrehung des Rings 6 in eine entsprechende Änderung der Struktur der Flüssigkeitslinse 20 umsetzten. Dies erlaubt es dem Benutzer, sehr schnell die Lichtabgabe seinen entsprechenden Wünschen anzupassen. Eine alternative Ausfuhrungsform hierzu würde darin bestehen, ein Verstellen der Flüssigkeitslinse 20 mittels eines elektrischen Motors vorzunehmen, wobei dieser dann auch extern angesteuert werden könnte. Die Ansteuerung kann dabei insbesondere von einer Zentrale aus, beispielsweise mittels des DALI- oder DMX-Standards erfolgen.

Ferner bestehen mehrere Möglichkeiten, die bislang beschriebene erfindungsgemäße Lösung weiterzubilden.

Dabei besteht zunächst selbstverständlich auch die Möglichkeit, mehrere derartiger System, also Lichtquellen mit zugeordneter verstellbarer Optik in eine Leuchte gemeinsam zu integrieren und z.B. nebeneinander anzuordnen. Hierbei könnte jedes System mit einer Lichtquelle bzw. Lichtquellen unterschiedlicher Spektren bzw. unterschiedlicher Intensität, Farbe und/oder Farbtemperatur bestückt sein, sodass bei verschiedenen Einstellungen der Optiken dekorative Farbringe entstehen.

Eine andere Weiterbildung könnte darin bestehen, die Membran der adaptiven Flüssigkeitslinse, welche üblicherweise in einen Ring eingespannt ist, in ein rechteckförmiges Halteelement einzuspannen. In diesem Fall ergibt sich ein im Querschnitt etwa kissenförmiger Lichtkegel mit abgerundeten Ecken und bei einer Veränderung der Einstellung der adaptiven Flüssigkeitslinse wird das Strahlenbündel bzw. die Lichtverteilung lediglich im Wesentlichen entlang einer Richtung variiert.

Ferner wäre auch denkbar, die Lichtaustrittsfläche der Vorsatzlinse rechteckig, insbesondere quadratisch auszubilden. Auch in diesem Fall wird ein rechteckiger bzw. quadratischer Beleuchtungsbereich mit abgerundeten Ecken erzielt, wobei abhängig davon, ob die Membran der Flüssiglinse in einen Ring oder ein rechteckförmiges Haltelement eingespannt ist, eine Verteilung in einer oder zwei Richtungen erfolgen kann.

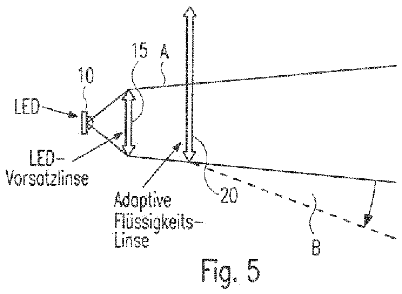

In Figur 5 ist dann eine nicht erfindungsgemäße Ausgestaltung gezeigt, bei der die adaptive Flüssigkeitslinse 20 derart angeordnet ist, dass sie im Vergleich zu der Vorsatzlinse 15 und der LED 10 bezüglich der optischen Achse leicht versetzt angeordnet ist, was zur Folge hat, dass nur ein Teil der Flüssigkeitslinse 20, beispielsweise nur eine Hälfte mit gebündeltem Licht beleuchtet wird. Wird nunmehr die Einstellung der adaptiven Flüssigkeitslinse 20 verändert, so hat dies auch eine Änderung der Richtung des abgegebenen Lichtbündels zur Folge. Es besteht also auch hier die Möglichkeit, die Lichtabgabe dann den speziellen äußeren Gegebenheiten anzupassen.

Abschließend ist anzumerken, dass die erfindungsgemäße Optik nicht nur bei Strahlerleuchten, wie sie in Figur 1 gezeigt sind, zum Einsatz kommen kann. Generell ist ein Einsatz eines derartigen optischen Systems dann sinnvoll, wenn das Licht einer sehr kompakten, im Wesentlichen punktförmigen Lichtquelle mit Hilfe einer Optik in ein Strahlenbündel zum gezielten Beleuchten eines bestimmten Bereichs umgesetzt werden und die Möglichkeit bestehen soll, Einfluss auf die Lichtabgabe nehmen zu können. Denkbar wäre dementsprechend auch der Einsatz derartiger optischer Systeme insbesondere in so genannten Downlights oder Highbay-Leuchten, also Leuchten, die in oder an der Decke eines Raums bzw. einer Halle angeordnet und dazu ausgebildet sind, gezielt einen unterhalb der Leuchte liegenden Bereich zu beleuchten.

## Patentansprüche

1. Leuchte (1) mit einer im Wesentlichen punktförmigen Lichtquelle (10), insbesondere einer LED, einer LED-Anordnung oder einer OLED, sowie einem der Lichtquelle (1) zugeordneten optischen System (5),
wobei das optische System (5) zwei in Lichtabstrahlrichtung der Leuchte hintereinander, an festen Positionen angeordnete Linsen (15, 20) aufweist und die zweite Linse (20) durch eine adaptive Flüssigkeitslinse gebildet ist,
und wobei die erste Linse (15) durch eine Vorsatzlinse gebildet ist, deren der adaptiven Flüssigkeitslinse zugeordnete Lichtaustrittsfläche mit einer Struktur versehen ist, welche eine kleine bzw. geringfügige Winkelstreuung des austretenden Lichts bewirkt, wobei die kleine bzw. geringfügige Winkelstreuung derart bemessen ist, dass der sog. Halbwertswinkel bei ±20° liegt,
wobei die Struktur dazu beiträgt, dass das von der Lichtquelle (1) abgestrahlte Licht auf die Flüssigkeitslinse (20) gerichtet wird und
wobei die erste Linse (15) derart ausgestaltet und positioniert ist, dass ein Lichtbündel erzeugt wird, welches vollständig und mittig auf die nachfolgende adaptive Flüssigkeitslinse (20) geworfen wird,
und wobei die Leuchte als Strahlerleuchte, Downlight- oder Highbay-Leuchte ausgebildet ist.

2. Leuchte nach Anspruch 1,
**dadurch gekennzeichnet,**
**dass** die erste Linse (15) eine kollimierende Vorsatzlinse ist.

3. Leuchte nach Anspruch 1 oder 2,
**dadurch gekennzeichnet,**
**dass** die erste Linse (15) fokussierend wirkt.

4. Leuchte nach einem der vorherigen Ansprüche,
**dadurch gekennzeichnet,**
**dass** die Vorsatzlinse eine ebene Lichtaustrittsfläche aufweist.

5. Leuchte nach einem der vorherigen Ansprüche,
**dadurch gekennzeichnet,**
**dass** die Lichtaustrittsfläche der ersten Linse (15) zusätzlich leicht diffus streuend ausgebildet, insbesondere aufgeraut oder mattiert ist.

6. Leuchte nach einem der vorherigen Ansprüche,
**dadurch gekennzeichnet,**
**dass** die beiden Linsen (15, 20) entlang einer von der Lichtquelle (10) ausgehenden Zentralachse ausgerichtet sind.

7. Leuchte nach einem der vorherigen Ansprüche,
**dadurch gekennzeichnet,**
**dass** diese Mittel zum Verstellen der adaptiven Flüssigkeitslinse aufweist.

8. Leuchte nach Anspruch 7,
**dadurch gekennzeichnet,**
**dass** die Mittel zum Verstellen der Flüssigkeitslinse
a) ein drehbar gelagertes Gehäuseteil (6) aufweisen und dazu ausgebildet sind, ein Verdrehen des Gehäuseteils (6) in ein Verstellen der Flüssigkeitslinse umzusetzen, oder
b) einen extern ansteuerbaren Stellmotor aufweisen.

9. Leuchte nach einem der vorherigen Ansprüche,
**dadurch gekennzeichnet,**
**dass** die erste Linse (15) eine rechteckige, insbesondere eine quadratische Lichtaustrittsfläche aufweist.

10. Leuchte nach einem der vorherigen Ansprüche,
**dadurch gekennzeichnet,**
**dass** es sich um einen Strahler, ein Downlight oder eine Highbay-Leuchte handelt.

## Claims

1. Luminaire (1) having a substantially punctiform light source (10), in particular an LED, an LED arrangement, or an OLED, as well as an optical system (5) assigned to the light source (1),
wherein the optical system (5) has two lenses (15, 20) arranged in fixed positions in the light emission direction of the luminaire and wherein the second lens (20) is formed by an adaptive fluid lens, and
wherein the first lens (15) is formed by an ancillary lens whose light exit surface associated with the adaptive fluid lens is provided with a structure which causes small or slight angular dispersion of the exiting light, wherein the small or slight angular dispersion is such that the so-called half-value angle is ±20°,
wherein the structure contributing to the light emitted from the light source (1) is directed towards the fluid lens (20), and
wherein the first lens (15) is configured and positioned to produce a light beam which is thrown wholly and centrally onto the subsequent adaptive fluid lens (20), and
wherein the luminaire is designed as a spotlight, downlight or highbay luminaire.

2. Luminaire according to claim 1,
**characterized in that**
the first lens (15) is a collimating ancillary lens.

3. Luminaire according to claim 1 or 2,
**characterized in that**
the first lens (15) has a focusing effect.

4. Luminaire according to one of the preceding claims,
**characterized in that**
the ancillary lens has a flat light exit surface.

5. Luminaire according to one of the preceding claims,
**characterized in that**
in addition, the light exit surface of the first lens (15) is formed to provide slightly diffuse dispersion, in particular by being roughened or frosted.

6. Luminaire according to one of the preceding claims,
**characterized in that**
the lenses (15, 20) are aligned along a central axis extending from the light source (10).

7. Luminaire according to one of the preceding claims,
**characterized in that**
it comprises means for adjusting the adaptive fluid lens.

8. Luminaire according to claim 7,
**characterized in that**
means for adjusting the fluid lens comprise:
a) a rotatably mounted housing part (6), wherein they are adapted to implement rotation of the housing part (6) upon adjustment of the fluid lens, or
b) comprise an externally-controllable servomotor.

9. Luminaire according to one of the preceding claims,
**characterized in that**
the first lens (15) has a rectangular, in particular square light exit surface.

10. Luminaire according to one of the preceding claims,
**characterized in that**
it is a spotlight, a downlight or a highbay luminaire.

## Revendications

1. Luminaire (1) avec une source de lumière (10) globalement ponctuelle, plus particulièrement une LED, un dispositif à LED ou une OLED, ainsi qu'un système optique (5) correspondant à la source de lumière (1),
le système optique (5) comprenant deux lentilles (15, 20) disposées l'une derrière l'autre dans la direction d'émission de lumière du luminaire, à des positions fixes, et la deuxième lentille (20) étant constituée d'une lentille liquide adaptative,
et la première lentille (15) étant constituée d'une lentille de conversion dont la surface de sortie de lumière correspondant à la lentille liquide adaptative est munie d'une structure qui provoque une petite ou faible dispersion angulaire de la lumière sortante, la petite ou faible dispersion angulaire étant telle que l'angle de demie-valeur est de ±20°,
la structure contribue à orienter la lumière émise par la source de lumière (1) vers la lentille liquide (20) et
la première lentille (15) étant conçue et positionnée de façon à ce qu'un faisceau lumineux soit généré, qui est réfléchi entièrement et au centre de la lentille liquide adaptative (20) qui suit,
et le luminaire étant conçu comme un projecteur, un luminaire downlight ou un luminaire highbay.

2. Luminaire selon la revendication 1,
**caractérisé en ce que**
la première lentille (15) est une lentille de conversion de collimation.

3. Luminaire selon la revendication 1 ou 2,
**caractérisé en ce que**
la première lentille (15) agit de manière focalisante.

4. Luminaire selon l'une des revendications précédentes,
**caractérisé en ce que**
la lentille de conversion présente une surface de sortie de lumière plane.

5. Luminaire selon l'une des revendications précédentes,
**caractérisé en ce que**
la surface de sortie de lumière de la première lentille (15) est en outre conçue de manière à provoquer une légère diffusion, plus particulièrement dépolie ou mate.

6. Luminaire selon l'une des revendications précédentes,
**caractérisé en ce que**
les deux lentilles (15, 20) sont orientées le long d'un axe central sortant de la source de lumière (10).

7. Luminaire selon l'une des revendications précédentes,
**caractérisé en ce que**
celui-ci comprend des moyens pour le réglage de la lentille liquide adaptative.

8. Luminaire selon la revendication 7,
**caractérisé en ce que**
les moyens de réglage de la lentille liquide
a) comprennent une partie de boîtier (6) logée de manière rotative et sont conçues pour convertir une rotation de la partie de boîtier (6) en un réglage de la lentille liquide ou
b) comprennent un moteur pas-à-pas pouvant être contrôlé de l'extérieur.

9. Luminaire selon l'une des revendications précédentes,
**caractérisé en ce que**
la première lentille (15) présente une surface de sortie de lumière rectangulaire, plus particulièrement carrée.

10. Luminaire selon l'une des revendications précédentes,
**caractérisé en ce que**
il s'agit d'un projecteur, d'un luminaire downlight ou d'un luminaire highbay.
